# EUROPEAN PATENT SPECIFICATION

(11) **EP 3 269 998 B1**
(45) Date of publication and mention of the grant of the patent: **15.09.2021**
(21) Application number: 15884307.8
(22) Date of filing: 27.04.2015
(51) Int. Cl.: F16F 7/12, F16F 1/38

(54) **HOLED AND SPHERICAL HINGE TYPE RUBBER ELASTIC ELEMENT**
AUSGEHÖHLTES UND KUGELFÖRMIGES ELASTISCHES KAUTSCHUKELEMENT VOM SCHARNIERTYP
ÉLÉMENT ÉLASTIQUE EN CAOUTCHOUC DU TYPE À CHARNIÈRE TROUÉ ET SPHÉRIQUE

(30) Priority: 10.03.2015 CN 201510103602
(43) Date of publication of application: 17.01.2018
(73) Proprietor: Zhuzhou Times New Material Technology Co., Ltd. (China Corporation), Tianyuan District Zhuzhou, Hunan 412007 (CN)
(72) Inventor: QU, Xiaobo, Zhuzhou Hunan 412007 (CN); LIU, Luyang, Zhuzhou Hunan 412007 (CN); ZHOU, Wei, Zhuzhou Hunan 412007 (CN); SUN, Haiyan, Zhuzhou Hunan 412007 (CN); GUO, Xiwen, Zhuzhou Hunan 412007 (CN)
(74) Representative: Elzaburu S.L.P.
(86) International application number: PCT/CN2015/077502
(87) International publication number: WO 2016/141624

(56) References cited:
- EP-A1- 0 412 863
- CN-A- 101 435 481
- CN-A- 101 520 076
- CN-U- 202 023 875
- JP-A- 2000 065 113
- JP-A- 2000 065 113
- JP-A- 2004 347 073
- JP-U- H03 118 335
- JP-U- S58 178 538
- US-A- 4 889 328
- US-A1- 2004 113 337
- US-A1- 2009 295 051
- None

## Description

This application claims the benefit of priority to Chinese Patent Application No. 201510103602.4 titled "HOLED AND SPHERICAL HINGE TYPE RUBBER ELASTIC ELEMENT", filed with the Chinese State Intellectual Property Office on March 10, 2015.

### Field

The present application relates to the technical field of spherical hinge type rubber elastic elements, and particularly to a holed spherical hinge type rubber elastic element.

### Background

Spherical hinge products can achieve effects such as vibration damping, traction, flexible connection according to their different installation positions and design functions in the loading operation process of a vehicle. In order to ensure the dynamic performance and comfort of vehicle operation, it is required that the product has a small stiffness when the vehicle is in an unloaded state. However, in order to ensure the reliability of vehicle operation, it is required that the product has a high stiffness when the vehicle is under a maximum load (when starting and braking) to thereby limit the displacement timely. Therefore spherical hinge, especially a traction spherical hinge, is required to have a certain degree of variable stiffness.

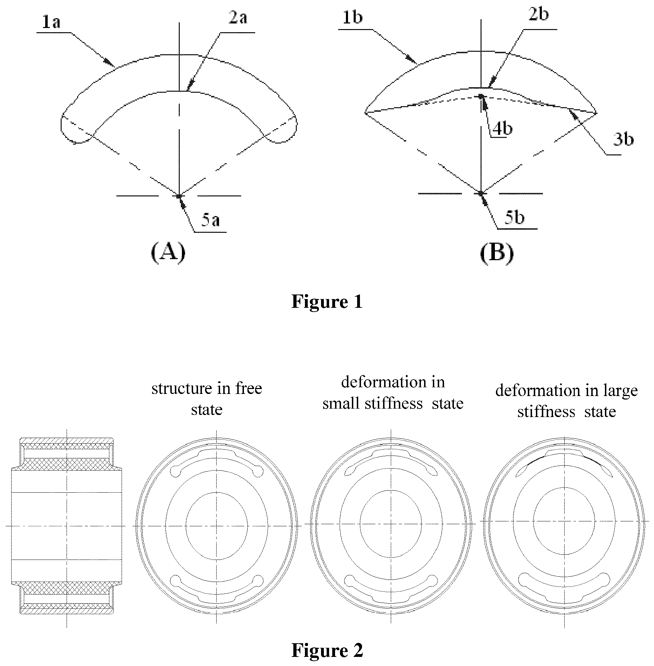

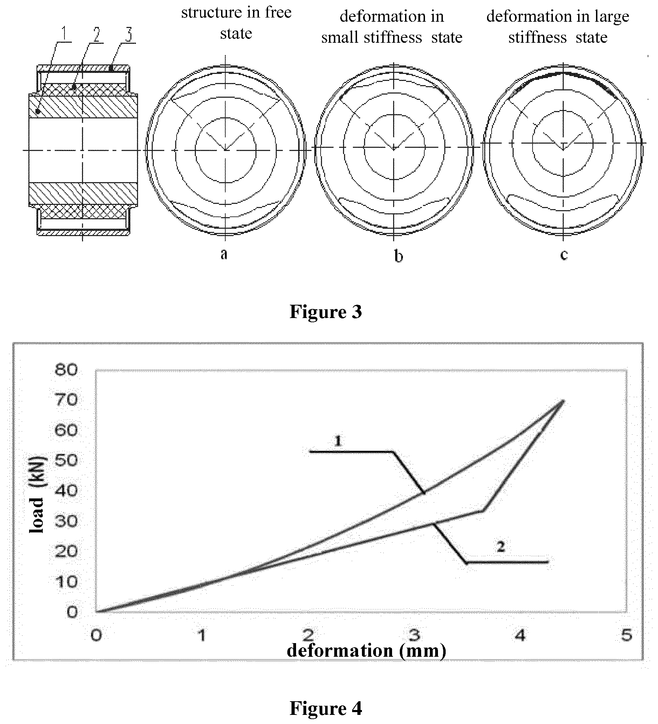

In order to meet the variable stiffness requirement of the spherical hinge product, a holed structure is required to be provided in a rubber surface of the product. A holed structure of a conventional spherical hinge type product is generally a common fan-shaped structure, two sides of which are respectively transitioned by a circular arc, and a distance between an inner circular arc and an outer circular arc is designed according to the variable stiffness requirement of the product, as shown in Figure 1 (A). The design of the holed structure of the above spherical hinge type product is not ideal. In the case that the product is loaded in a radial direction, the transitional circular arcs on the two sides of the holed structure are apt to bend and deform under the condition of radial compression, which makes the stress concentration at the position to be obvious, finally causing the rubber at the transitional circular arc to be fractured, as shown in Figure 2. In addition, the variable stiffness design of the conventional spherical hinge type product may present sudden change of stiffness, which does not facilitate vibration damping and flexible connection effect of the rubber product, and the reason is described as follows. As the load increases, the rubber surfaces of the inner circular arc and the outer circular arc at the holed portion do not provide any stiffness in the process of getting close but not being in contact, and at the moment, the stiffness of the product is small and basically not changed. After the load is increased to a certain degree, the rubber profiles of the inner circular arc and the outer circular arc suddenly come into full-contact with each other under a certain specific amount of deformation, and due to the sudden increase of the contact area, the stiffness may be increased suddenly and a large stiffness is provided, thus a sudden change of the stiffness is presented in a region near the deformation area in which the inner circular arc-shaped profile and the outer circular arc-shaped profile are in contact with each other, as shown by curve 2 in Figure 4. Accordingly, the holed structure of the spherical hinge type product described above has defects.

JP2000065113A discloses a bush type insulator, which is provided with a rubber-like elastic body located between an inner cylinder and an outer cylinder, a pair of arc-shaped holes in the rubber-like elastic body along a circumferential direction of the inner cylinder, and a reduction hole which has a larger radius of curvature than a width of the arc-shaped hole in the radius direction at an end.

### Summary

A technical issue to be addressed by the present application is to provide a holed spherical hinge type rubber elastic element. The holed spherical hinge type rubber elastic element according to the present application is capable of smoothly increasing the variable stiffness and also avoiding bending deformation of the rubber.

A holed spherical hinge type rubber elastic element is provided according to the present application, which includes a spindle; a rubber sleeved on the spindle; and a sleeve sleeved on the rubber. The rubber is provided with two hole structures symmetrically arranged taking the circle center corresponding to the rubber as an axis, and the hole structures penetrate through the rubber axially, Each of the hole structures includes an outer arc-shaped surface close to a sleeve side, an inner arc-shaped surface close to a spindle side and two side surfaces connected to the outer arc-shaped surface and the inner arc-shaped surface, the inner arc-shaped surface has an arc in the same direction as the sleeve, and an included angle between a normal line of the inner arc-shaped surface and each of the side surfaces is an obtuse angle.

A chamfer is provided at a connection portion between each of the side surfaces and the inner arc-shaped surface.

Each of the side surfaces is a plane.

Preferably, the outer arc-shaped surface is coincident with an arc-shaped surface close to the rubber side of the sleeve.

Preferably, circle centers corresponding to the inner arc-shaped surface and the outer arc-shaped surface are coincident with the circle center of the sleeve.

Compared with the conventional technology, a holed spherical hinge type rubber elastic element is provided according to the present application, which includes a spindle, a rubber sleeved on the spindle, and a sleeve sleeved on the rubber. The rubber is provided with two hole structures symmetrically arranged taking the circle center corresponding to the rubber as an axis, and the hole structures penetrate through the rubber axially. Each of the hole structures includes an outer arc-shaped surface close to a sleeve side, an inner arc-shaped surface close to a spindle side and two side surfaces each being connected to the outer arc-shaped surface and the inner arc-shaped surface. The inner arc-shaped surface has an arc in the same direction as the sleeve, an included angle between a normal line of the inner arc-shaped surface and each of the side surfaces is an obtuse angle, as shown in Figure 1 (B). In the case that the holed spherical hinge type rubber elastic element according to the present application is loaded in a radial direction, as the load increases, two side surfaces at the holed portion gradually get close to the outer arc-shaped surface parallelly first and then closely fit the outer arc-shaped surface parallelly, the contact area of the rubber gradually increases, and the stiffness gradually increases. Further, since the inner arc-shaped surface is smoothly connected to the side surfaces, driven by the movement of the two side surfaces closely fitting the outer arc-shaped surface, two ends of the inner arc-shaped surface are gradually converted into annular fan-shaped smooth beveled edges and gradually get close to the outer arc-shaped surface, and finally completely fit the outer arc-shaped surface, thus the contact area of the rubber is maximized, thereby achieving a large stiffness. Since in the whole process, the contact area of the rubber is increased to the maximum area gradually, the increase process of the stiffness is smooth, which facilitates dynamic performance and comfort of the vehicle. In addition, the side surfaces are smoothly connected between the outer arc-shaped surface and the inner arc-shaped surface, and the side surfaces gradually fit the outer arc-shaped surface parallelly in the deformation process, thereby, bending deformation of the rubber is avoided.

### Brief description of the drawings

Figure 1 is a comparison schematic view between hole structures of a spherical hinge type rubber elastic element in the conventional technology and a spherical hinge type rubber elastic element according to the present application;
Figure 2 is a schematic view the structure under a free state, a deformation under a small stiffness state and a deformation under a large stiffness state of a holed spherical hinge type product according to the present application, respectively;
Figure 3 is a schematic view showing the structure under a free state, a deformation under a small stiffness state and a deformation under a large stiffness state of a holed spherical hinge type product according to the present application, respectively;
Figure 4 is a comparison schematic view between a variable stiffness curve of the holed spherical hinge type product in the conventional technology with a suddenly changed stiffness and a variable stiffness curve of the holed spherical hinge type product according to the present application with a smoothly increased stiffness;
Figure 5 is a schematic view showing the structure of a spherical hinge type product according to a first embodiment of the present application; and
Figure 6 is a schematic view showing the structure of a spherical hinge type product according to a second embodiment of the present application.

### Detailed description

In order to further understand the present application, preferred implementations of the present application are described below with reference to embodiments. However, it should be understood that these descriptions are only intended to further illustrate the features and advantages of the present application rather than limiting the claims of the present application.

The embodiments of the present application disclose a holed spherical hinge type rubber elastic element, which includes a spindle, a rubber sleeved on the spindle, and a sleeve sleeved on the rubber. The rubber is provided with two hole structures symmetrically arranged taking the circle center as an axis, and the hole structures penetrate through the rubber axially. Each of the hole structures includes an outer arc-shaped surface close to a sleeve side, an inner arc-shaped surface close to a spindle side, and two side surfaces each being connected to the outer arc-shaped surface and the inner arc-shaped surface. The inner arc-shaped surface has an arc with the same direction as the sleeve, and an included angle between a normal line of the inner arc-shaped surface and each of the side surfaces is an obtuse angle, as shown in Figure 1 (B), which is a schematic view showing the holed structure of the rubber according to the present application. In the Figure, 1b is an outer arc, 2b is an inner arc, and 3b is a side edge, 4b is an intersection point formed by connecting of two side edges, and 5b is the center of a circle where the outer arc is located. In the holed spherical hinge type rubber elastic element according to the present application, the obtuse angle is achieved by the arrangement that the intersection point formed by connecting of the side edges of the side surfaces is not coincident with the circle center corresponding to the outer arc-shaped surface, and is located above the circle center corresponding to the outer arc-shaped surface.

The schematic view of the structure of a holed spherical hinge type rubber elastic element according to the present application is as shown in Figure 3. In Figure 3, 1 indicates a spindle, 2 indicates a rubber sleeved on the spindle 1 and bonded onto the spindle 1 through vulcanization; 3 indicates a sleeve sleeved on the rubber 2 and adhered to the rubber 2 through vulcanization. In Figure 3, a is a schematic view of the structure of a spherical hinge type rubber elastic element in a free state, in which the rubber 2 is provided with a hole structure at the sleeve side thereof, and the outer arc-shaped surface is an arc-shaped surface through which the rubber is in contact with the sleeve.

The two side surfaces of the hole structure according to the present application is a plane. The outer arc-shaped surface of the hole structure according to the present application is preferably an arc-shaped surface via which the rubber is in contact with the sleeve. In the case that the outer arc-shaped surface of the hole structure is the arc-shaped surface via which the rubber is in contact with the sleeve, in order to achieve a smooth transition between the side surface of the hole structure and the sleeve, a chamfer is provided on the surface of the rubber at a portion where the rubber is in contact with the sleeve, and the size of the chamfer is the smaller the better on the premise of meeting the operability requirements of the practical technique process, and preferably ranges from R0.5 to R1.5. The lengths of the inner arc-shaped surface and the outer arc-shaped surface and the distance between the inner arc-shaped surface and the outer arc-shaped surface can be determined according to stiffness and variable stiffness requirements of different products.

In order to make the rubber and the sleeve fit closely in the case that the holed spherical hinge type rubber elastic element is under a maximum load condition, the hole structure according to the present application have the inner arc-shaped surface and the outer arc-shaped surface located in concentric circles, namely, the inner arc-shaped surface and the outer arc-shaped surface of the hole structure are preferably circular arc-shaped surfaces concentric with the spindle and the sleeve. In the hole structure according to the present application, the intersection point formed by connecting of the side edges of the two side surfaces is not coincident with the circle center corresponding to the outer arc-shaped surface, and is located above the circle center corresponding to the outer arc-shaped surface. Such a design of the side surfaces is to enable the side edges of the hole structure to be longer and smoother, and the distance between the outer arc-shaped surface and the inner arc-shaped surface is smoothly transitioned via the smooth side surfaces, thus avoiding sudden change of the stiffness caused by sudden change of the distance.

As an embodiment according to the invention, a relatively large chamfer is arranged in a connection portion between the side surfaces and the inner arc-shaped surface, and the chamfer has a radius ranging from R40 to R100 to achieve a smooth transition between the side surface and the inner arc-shaped surface, thus preventing a deep groove from being formed at the connection portion between the side surface and the inner arc-shaped surface.

In order to prevent a large groove or crumple from being generated at the hole structure in the case that the spherical hinge type rubber elastic element is loaded, in the hole structure according to the present application, the included angle between the normal line of the inner arc-shaped surface and the inner arc-shaped surface is an obtuse angle, and only when the angle between the inner arc-shaped surface and the inner arc-shaped surface is in the obtuse angle state, can it be ensured that the inner arc-shaped surface and the outer arc-shaped surface fit gradually in the case that the rubber is loaded and the stiffness thereof is varied, thus preventing the rubber from generating bending deformation.

The holed spherical hinge type rubber elastic element according to the present application employs the hole structure described above, thus, in the process of being loaded radially, the rubber at the holed portion parallelly gets close to the sleeve gradually, and closely fits with the sleeve parallelly, and the contact area of the rubber is increased gradually, thereby achieving the gradually increased variable stiffness of the holed spherical hinge type rubber elastic element, as shown in Figures 3b and 3c. As illustrated in Figure 3, in the process that the holed spherical hinge type rubber elastic element is loaded, the rubber at the holed portion gets close to the sleeve by parallelly getting close rather than by shearing or compression, thus preventing a bending deformation from being generated.

The holed spherical hinge type rubber elastic element according to the present application can eliminate stress concentration caused by bending deformation of the rubber, to allow the increasing process of the variable stiffness to be smooth, which is specifically described as follows.

According to the technical solution of the present application, the rubber profile at the holed portion is deformed in a manner from gradually getting close parallelly to closely fit parallelly. Such a deformation manner effectively avoids compression and bending deformation of the rubber, eliminates rubber fractures caused by stress concentration of the rubber, and greatly improves the fatigue life of the product. The contact area of the rubber is increased gradually with the load increases, thus, the stiffness of the product is increased gradually and uniformly, which facilitates improving of the vibration damping effect of the product, and moreover, multiple stiffness requirements under multiple loads can be met according to the requirements. As shown in Figure 4, which is a comparison view between a variable stiffness curve of a spherical hinge type rubber elastic element in the conventional technology under different loads and a variable stiffness curve of the spherical hinge type rubber elastic element according to the present application under different loads, the curve 1 is the variable stiffness curve of the spherical hinge type rubber elastic element according to the present application, and the curve 2 is the variable stiffness curve of the spherical hinge type rubber elastic element in the conventional technology. As illustrated in Figure 4, the stiffness of the spherical hinge type rubber elastic element according to the present application is increased smoothly.

In order to further understand the present application, the spherical hinge type rubber elastic element according to the present application is described in detail with reference to the following embodiments, and the scope of the present application is not limited by the following embodiments.

### First embodiment

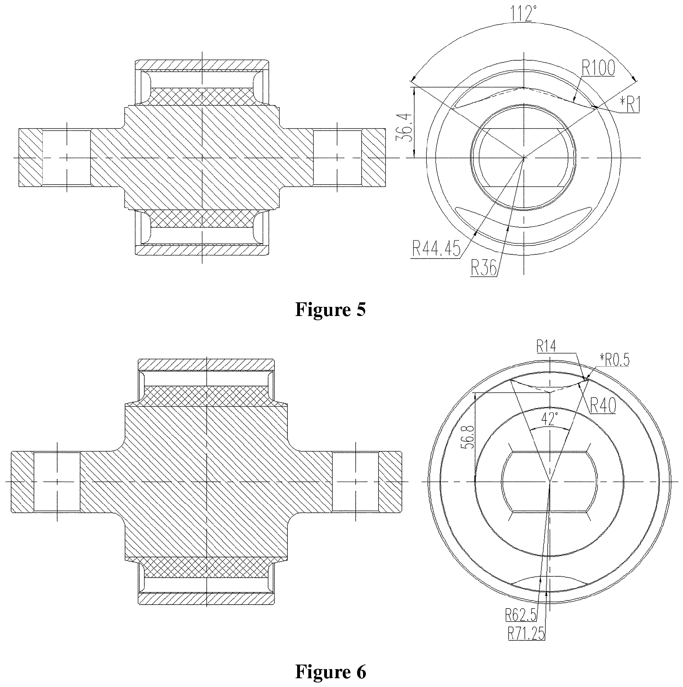

A holed spherical hinge type rubber elastic element includes a spindle, a rubber sleeved on the spindle, and a sleeve sleeved on the rubber. The rubber is provided with two hole structures symmetrically arranged taking the circle center as an axis, and the hole structures penetrate through the rubber axially. Each of the hole structures includes an outer arc-shaped surface close to a sleeve side, an inner arc-shaped surface close to a spindle side and two side surfaces each being connected to the outer arc-shaped surface and the inner arc-shaped surface. The inner arc-shaped surface has an arc with the same direction as the sleeve, an included angle between a normal line of the inner arc-shaped surface and each side surface is an obtuse angle, as shown in Figure 5 which is a sectional view of the holed spherical hinge type rubber elastic element according to this embodiment. As illustrated in Figure 5, in the case that the holed spherical hinge type rubber elastic element is not loaded, two annular-like fan-shaped through holes with a central angle of 112 degrees are symmetrically provided at portions close to the sleeve of the rubber. The inner arc and the outer arc of each fan-shaped hole are circular arcs co-concentric with the spindle and the sleeve, and have radii of R36mm and R44.45mm respectively. The intersection point of beveled edges at the two sides is at a portion 36.4mm above the circle center corresponding to the inner arc and the outer arc. Each of the beveled edges is connected to the inner arc via a chamfer of R100 to avoid a transitional depression at the connecting portion. Considering that an edge of an embedded block forming the holed structure is required to be chamfered in the process of production, a chamfer of R1 is provided at a portion, in contact with the outer arc, of each of the beveled edges. By the smooth transition of the side surfaces of the holed structure, this embodiment achieves a variable stiffness with the same degree as the variation can be achieved by the conventional structure, and the increasing process of the stiffness is smooth, as shown by the curve 2 in Figure 4. Moreover, since the bending deformation of the rubber is eliminated, the stress of the rubber at the holed portion in this embodiment is declined from 10.24Mpa, which is a value of stress subjected by the conventional structure, to 4.98Mpa, and the declining rate is 51.4%, therefore the stress has a significant declining rate. In addition, by comparison of fatigue tests, obvious fractures are presented in the conventional structure when the structure has been fatigued for 763 thousand times, and no fractures are presented in the structure according to this embodiment even when the structure has been fatigued for 3 million times, which shows that the product according to this embodiment has a significantly improved service life compared with the conventional structure.

### Second embodiment

The second embodiment has a similar structure as the first embodiment. Just different sized holes are provided for meeting different variable stiffness requirements, and beveled edges of the special annular fan-shaped hole are optimized into arc shapes, as shown in Figure 6. Figure 6 is a sectional view of the holed spherical hinge type rubber elastic element according to this embodiment. As illustrated in Figure 6, in the case that the holed spherical hinge type rubber elastic element is not loaded, two annular fan-shaped through holes with a central angle of 42 degrees are symmetrically provided at portions of the rubber close to the sleeve. An inner arc and outer arc of each of the fan-shaped holes are circular arcs co-concentric with the spindle and the sleeve, and have radii of R62.5 and R71.25 respectively. The intersection point of the beveled edges at the two sides is at a portion 56.8mm above the circle center corresponding to the inner arc and the outer arc, and each of the beveled edges is optimized into a circular arc-shaped surface of R14. Each of the beveled edge is connected to the inner arc via a chamfer of R40 to avoid a transitional depression at the connecting portion. Considering that an edge of an embedded block forming the holed structure is required to be chamfered in the process of production, a chamfer of R0.5 is provided at a portion, in contact with the outer arc, of each of the beveled edges.

The above description of examples is only intended to help the understanding of the method and core concept of the present application. It should be noted that, for the person skilled in the art, a few of modifications and improvements may be made to the present application without departing from the principle of the present application, and these modifications and improvements are also deemed to fall into the scope of the present application defined by the claims.

Based on the above description of the disclosed embodiments, the person skilled in the art is capable of carrying out or using the present application. It is obvious for the person skilled in the art to make many modifications to these embodiments. The general principle defined herein may be applied to other embodiments without departing from the scope of the invention as defined in the appended Claims. Therefore, the present application is not limited to the embodiments illustrated herein, but should be defined by the broadest scope consistent with the principle and novel features disclosed herein.

## Claims

1. A holed spherical hinge type rubber elastic element, comprising:
a spindle (1);
a rubber (2) sleeved on the spindle (1); and
a sleeve (3) sleeved on the rubber (2), wherein
the rubber (2) is provided with two hole structures symmetrically arranged taking a circle center corresponding to the rubber (2) as an axis, and the hole structures penetrate through the rubber (2) axially, wherein each of the hole structures comprises an outer arc-shaped surface (1b) close to a sleeve side, an inner arc-shaped surface (2b) close to a spindle side, and two side surfaces (3b) each being connected to the outer arc-shaped surface (1b) and the inner arc-shaped surface (2b); and
wherein the hole structures have the inner arc-shaped surface (2b) and the outer arc-shaped surface (1b) located in concentric circles; and
the inner arc-shaped surface (2b) has an arc in the same direction as the sleeve (3), and an included angle between a normal line of the inner arc-shaped surface (2b) and each of the side surfaces (3b) is an obtuse angle; and
wherein each of the side surfaces (3b) is a plane and an intersection point formed by connecting of the side edges of the two side surfaces (3b) is not coincident with a circle center corresponding to the outer arc-shaped surface (1b), and is located above the circle center corresponding to the outer arc-shaped surface (1b), and
**characterized in that**
a relatively large chamfer is arranged in a connection portion between each of the side surfaces (3b) and the inner arc-shaped surface (2b), and the chamfer has a radius ranging from R40 to R100 to achieve a smooth transition between the side surface (3b) and the inner arc-shaped surface (2b).

2. The holed spherical hinge type rubber elastic element according to claim 1, wherein the outer arc-shaped surface (1b) is coincident with an arc-shaped surface close to the rubber (2) side of the sleeve (3).

3. The holed spherical hinge type rubber elastic element according to claim 1, wherein circle centers corresponding to the inner arc-shaped surface (2b) and the outer arc-shaped surface (1b) are coincident with a circle center of the sleeve (3).

## Patentansprüche

1. Ein ausgehöhltes und kugelförmiges elastisches Kautschukelement vom Scharniertyp, umfassend:
eine Spindel (1);
einen Gummi (2), der auf der Spindel (1) aufgeschoben ist; und
eine Hülse (3), die auf den Gummi (2) aufgeschoben ist, wobei
der Gummi (2) mit zwei Lochstrukturen versehen ist, die symmetrisch angeordnet sind, wobei ein dem Gummi (2) entsprechender Kreismittelpunkt als Achse genommen wird, und die Lochstrukturen den Gummi (2) axial durchdringen, wobei jede der Lochstrukturen eine äußere bogenförmige Fläche (1b) nahe einer Hülsenseite, eine innere bogenförmige Fläche (2b) nahe einer Spindelseite und zwei Seitenflächen (3b) umfasst, die jeweils mit der äußeren bogenförmigen Fläche (1b) und der inneren bogenförmigen Fläche (2b) verbunden sind; und
wobei die Lochstrukturen die innere bogenförmige Oberfläche (2b) und die äußere bogenförmige Oberfläche (1b) aufweisen, die in konzentrischen Kreisen angeordnet sind; und
die innere bogenförmige Fläche (2b) einen Bogen in der gleichen Richtung wie die Hülse (3) hat und ein eingeschlossener Winkel zwischen einer Normalen der inneren bogenförmigen Fläche (2b) und jeder der Seitenflächen (3b) ein stumpfer Winkel ist; und
wobei jede der Seitenflächen (3b) eine Ebene ist und ein Schnittpunkt, der durch Verbinden der Seitenkanten der beiden Seitenflächen (3b) gebildet wird, nicht mit einem Kreismittelpunkt zusammenfällt, der der äußeren bogenförmigen Fläche (1b) entspricht, und über dem Kreismittelpunkt liegt, der der äußeren bogenförmigen Fläche (1b) entspricht, und
**dadurch gekennzeichnet, dass**
eine relativ große Abschrägung in einem Verbindungsabschnitt zwischen jeder der Seitenflächen (3b) und der inneren bogenförmigen Fläche (2b) angeordnet ist, und die Abschrägung einen Radius im Bereich von R40 bis R100 aufweist, um einen glatten Übergang zwischen der Seitenfläche (3b) und der inneren bogenförmigen Fläche (2b) zu erreichen.

2. Das ausgehöhlte und kugelförmige elastische Kautschukelement vom Scharniertyp nach Anspruch 1, wobei die äußere bogenförmige Fläche (1b) mit einer bogenförmigen Fläche nahe der Gummiseite (2) der Hülse (3) zusammenfällt.

3. Das ausgehöhlte und kugelförmige elastische Kautschukelement vom Scharniertyp nach Anspruch 1, wobei die Kreismittelpunkte, die der inneren bogenförmigen Fläche (2b) und der äußeren bogenförmigen Fläche (1b) entsprechen, mit einem Kreismittelpunkt der Hülse (3) übereinstimmen.

## Revendications

1. Un élément élastique en caoutchouc du type à charnière sphérique trouée,
comprenant :
une broche (1) ;
un caoutchouc (2) manchonné sur la broche (1) ; et
un manchon (3) monté sur le caoutchouc (2), dans lequel
le caoutchouc (2) est pourvu de deux structures de trou disposées symétriquement en prenant un centre de cercle correspondant au caoutchouc (2) comme axe, et les structures de trou pénètrent à travers le caoutchouc (2) axialement, dans lequel chacune des structures de trou comprend une surface extérieure en forme d'arc (1b) proche d'un côté du manchon, une surface intérieure en forme d'arc (2b) proche d'un côté de la broche, et deux surfaces latérales (3b) chacune étant reliée à la surface extérieure en forme d'arc (1b) et à la surface intérieure en forme d'arc (2b) ; et
dans lequel les structures de trous ont la surface intérieure en forme d'arc (2b) et la surface extérieure en forme d'arc (1b) situées dans des cercles concentriques ; et
la surface intérieure en forme d'arc (2b) a un arc dans la même direction que le manchon (3), et un angle inclus entre une ligne normale de la surface intérieure en forme d'arc (2b) et chacune des surfaces latérales (3b) est un angle obtus ; et
dans lequel chacune des surfaces latérales (3b) est un plan et un point d'intersection formé par la connexion des bords latéraux des deux surfaces latérales (3b) ne coïncide pas avec un centre de cercle correspondant à la surface extérieure en forme d'arc (1b), et est situé au-dessus du centre de cercle correspondant à la surface extérieure en forme d'arc (1b), et
**caractérisée en ce que**
un chanfrein relativement grand est disposé dans une partie de connexion entre chacune des surfaces latérales (3b) et la surface intérieure en forme d'arc (2b), et le chanfrein a un rayon compris entre R40 et R100 pour obtenir une transition douce entre la surface latérale (3b) et la surface intérieure en forme d'arc (2b).

2. Elément élastique en caoutchouc du type à charnière sphérique trouée selon la revendication 1, dans lequel la surface extérieure en forme d'arc (1b) coïncide avec une surface en forme d'arc proche du côté caoutchouc (2) du manchon (3).

3. Elément élastique en caoutchouc du type à charnière sphérique à trouée selon la revendication 1, dans lequel les centres de cercle correspondant à la surface intérieure en forme d'arc (2b) et à la surface extérieure en forme d'arc (1b) coïncident avec un centre de cercle du manchon (3).
